# FASCICULE DE BREVET EUROPEEN

(11) **EP 1 712 899 B1**
(45) Date de publication et mention de la délivrance du brevet: **14.03.2012**
(21) Numéro de dépôt: 06112454.1
(22) Date de dépôt: 11.04.2006
(51) Int. Cl.: G01N 27/02, G01R 27/02

(54) **Dispositif d`analyse de la composition du contenu d`un recipient**
Vorrichtung zur Analyse der Zusammensetzung des Inhalts eines Behälters
Device to analyse the composition of the contents of a receptacle

(30) Priorité: 15.04.2005 FR 0503774; 19.07.2005 FR 0507643
(43) Date de publication de la demande: 18.10.2006
(73) Titulaire: Manneschi, M. Alessandro, 52100 Arezzo (IT)
(72) Inventeur: Manneschi, M. Alessandro, 52100 Arezzo (IT)
(74) Mandataire: Texier, Christian

(56) Documents cités:
- DD-A1- 156 400
- FR-A- 2 661 084
- GB-A- 283 650
- US-A- 5 514 337
- US-A1- 2003 222 662
- US-A1- 2004 174 154
- US-B1- 6 511 851
- DATABASE WPI Week 197810 Derwent Publications Ltd., London, GB; AN 1978-19191A XP002401795 "Measurement of magnetite content in ore using cube dielectric container for sample" -& SU 554 490 A (FERR METALLURGY AUTOMN) 15 avril 1977 (1977-04-15)

## Description

La présente invention concerne le domaine de l'analyse de la composition du contenu de récipients tels que des bouteilles.

La présente invention peut trouver de nombreuses applications. Elle peut s'appliquer notamment au contrôle de fabrication dans des usines d'embouteillage pour éviter toute malversation sur le contenu de récipients fournis ultérieurement au grand public. L'invention peut également s'appliquer au contrôle de bagages transportés par des passagers en particulier des bagages à main conservés par des passagers dans les aéroports.

Le document FR-2661084 décrit un appareil destiné à maintenir à une température sensiblement constante prédéterminée, du vin en bouteille au cours de sa consommation. Ce document décrit un appareil comprenant une enceinte en un matériau thermiquement conducteur possédant une ouverture par laquelle peut être introduite une bouteille de vin, le volume de cette enceinte étant compris entre 2 et 5 fois le volume de la bouteille ; des moyens générateurs de froid et de chaud placés en contact thermique avec la paroi de ladite enceinte pour respectivement refroidir ou réchauffer celle-ci et des moyens de réglage associés aux moyens générateurs de froid ou de chaud pour adapter l'échange thermique avec l'enceinte en fonction de la température souhaitée pour le vin.

Le document DE-156400 décrit un dispositif d'analyse de substances diélectriques en poudre ou sous forme de granula. Le document décrit à cette fin une enceinte de réception formée d'une cavité verticale.

Les moyens d'examen par rayons X, bien connus, ne permettent pas de déterminer le contenu de bouteilles ou récipients équivalents. De tels moyens d'examen permettent en effet seulement le classement en deux catégories, matériaux organiques et non organiques. Ils ne permettent pas de distinguer entre eux deux matériaux organiques.

Par ailleurs, les bouteilles en verre ou en matière plastique scellées ne permettent pas un échantillonnage de leur contenu et ne permettent donc pas d'analyser ce dernier sauf à opérer une ouverture forcée.

Enfin les moyens jusqu'ici proposés pour tenter de procéder à une analyse du contenu de récipients requièrent une manipulation complexe de ces derniers.

Dans cette situation, un besoin important est ressenti de disposer de moyens simples, rapides et faciles de mise en oeuvre, d'investigation non destructifs pour déterminer la composition du contenu de récipients.

Ce but est atteint dans le cadre de la présente invention grâce à un dispositif d'analyse de la composition du contenu d'un récipient tel que défini en revendication 1 annexée.

Comme on le comprendra à la lecture de la description qui suit, l'utilisation d'un canal de réception défini par des génératrices inclinées vers le bas en éloignement de la face avant ouverte du canal par laquelle un récipient est introduit, permet un positionnement très précis et très rapide des récipients par rapport aux moyens de détection. Il suffit en effet de laisser glisser le récipient contre un fond de canal, opposé à sa face avant ouverte pour positionner automatiquement le récipient. La présente invention garantit ainsi à la fois une détection fiable et un flux rapide au niveau du contrôle.

De préférence dans le cadre de la présente invention, les moyens d'analyse non destructive comprennent :
- des moyens émetteurs/récepteurs d'un champ électromagnétique à au moins plusieurs fréquences comprises dans une plage de fréquences déterminée,
- des moyens aptes à mesurer l'impédance complexe des moyens émetteurs/récepteurs influencés par la charge constituée par le récipient et son contenu, représentative des caractéristiques diélectriques complexes du récipient et de son contenu, et
- des moyens aptes à fournir une information liée à l'impédance complexe mesurée et en conséquence à la nature du contenu dudit récipient.

Dans le cadre de la présente invention, on entend par « au moins plusieurs fréquences » un nombre de fréquences supérieur à 1.

Selon une autre caractéristique avantageuse de la présente invention, les moyens aptes à fournir une information liée à l'impédance complexe mesurée et en conséquence à la nature du contenu dudit récipient, comprennent des moyens aptes à comparer l'impédance complexe mesurée avec des valeurs de référence prédéterminées pour la même plage de fréquences et à générer une alarme, lorsque l'impédance complexe mesurée s'écarte des valeurs de référence.

Selon une autre caractéristique avantageuse de la présente invention, les moyens aptes à fournir une information liée à l'impédance complexe mesurée comprennent des moyens aptes à indiquer la nature ainsi détectée du contenu du récipient ou au moins la famille de ce contenu.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective d'un dispositif d'analyse conforme à un premier mode de réalisation de la présente invention,
- la figure 2 représente une vue schématique sous forme de blocs fonctionnels des éléments essentiels composant ce dispositif,
- la figure 3 représente la partie réelle et la partie imaginaire de l'impédance complexe mesurée dans le cas d'une charge composée d'eau, sur une large plage de fréquences,
- les figures 4 et 5 représentent deux vues schématiques en perspective de variantes du dispositif représenté sur la figure 1,
- les figures 6, 7, 8 et 9 représentent quatre variantes de réalisation de capteurs électromagnétiques émetteurs/récepteurs conformes à la présente invention, et
- les figures 10a, 10b et 10c représentent une cinquième variante de réalisation, tandis que les figures 11a et 11b représentent une sixième variante de réalisation, de capteurs électromagnétiques émetteurs/récepteurs conformes à la présente invention
- les figures 12a et 12b, et 13a et 13b représentent des variantes de réalisation de l'invention utilisées pour l'analyse de récipients de volumes variables.

Les moyens de mesure mis en oeuvre dans le cadre du mode de réalisation préférentiel de la présente invention, reposent essentiellement sur l'approche suivante.

Les matériaux diélectriques présentent quatre polarisations de base : électronique, ionique, de dipôle et migrationnelle.

Chaque type de polarisation est caractérisé par un temps de mise en place, appelé temps de montée. Si le champ électromagnétique d'excitation a une pulsation supérieure à l'inverse du temps de montée, la polarisation ne peut pas se réaliser. Par conséquent, la polarisation est présente uniquement aux fréquences inférieures à celles de coupure et est absente aux fréquences supérieures. Dans la zone de transition, on assiste à un phénomène de perte d'énergie dans le diélectrique dû à la rotation des molécules déphasées vis à vis du champ d'excitation.

Les temps de montée pour la polarisation électronique sont de 10⁻¹⁴ à 10⁻¹⁵ s, c'est-à-dire dans le domaine optique. Une telle gamme de fréquences est difficilement exploitable à l'échelle industrielle car les bouteilles à examiner peuvent être fréquemment partiellement ou complètement opaques.

La polarisation ionique a des temps de montée compris entre 10⁻¹³ et 10⁻¹⁴ s, très proche des temps de relaxation électronique. Elle est donc également difficilement exploitable.

La polarisation de dipôle est caractéristique des diélectriques polaires (comme par exemple l'eau).

La polarisation de dipôle, au contraire des polarisations électroniques et ioniques, qui sont sans inertie, persiste pour un certain temps après l'extinction d'une excitation. La polarisation de dipôle diminue avec une loi exponentielle et une constante de temps, appelée temps de relaxation, comprise entre 10⁻⁶ et 10⁻¹¹ s, c'est-à-dire dans le domaine des fréquences radio. Les ondes électromagnétiques ayant ces fréquences peuvent traverser le verre, la matière plastique et d'autres matériaux diélectriques. La Demanderesse a ainsi déterminé que les ondes électromagnétiques peuvent être utilisées pour l'examen du contenu de bouteilles ou récipients équivalents.

La polarisation migrationnelle est présente dans certains diélectriques, en particulier dans les matériaux hétérogènes, qui contiennent des impuretés. Dans ce cas, les charges se déplacent très lentement et le temps de montée peut être de plusieurs secondes, minutes, voire parfois heures. Ce type de polarisation par conséquent n'est mesurable qu'à très basse fréquence.

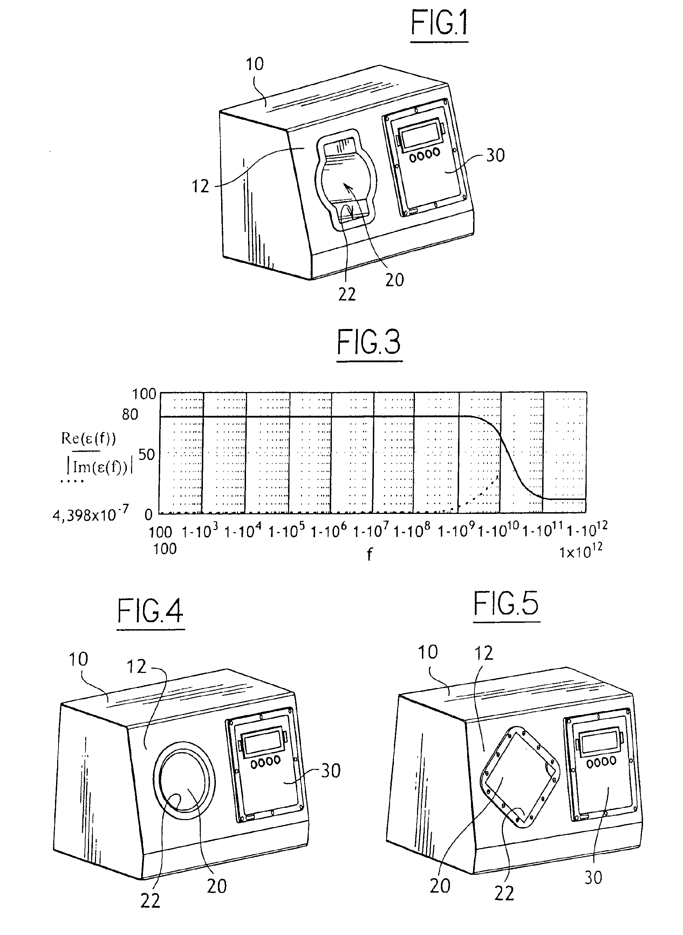

L'eau qui est un liquide polaire, et par conséquent les liquides à base d'eau, présentent un temps de relaxation de l'ordre de 10⁻¹¹ s à température ambiante, correspondant à une fréquence d'environ 16 GHz. La mesure de la constante diélectrique complexe à fréquence plus basse que celle de relaxation montre une partie réelle élevée et des pertes limitées (eau distillée) comme l'illustre la figure 3 annexée.

Les hydrocarbures saturés CnH(2n+2) sont des molécules non polaires ou avec un moment de dipôle électrique très bas, par conséquent, ils ne présentent pas un phénomène de polarisation de dipôle et la valeur de la partie réelle de la constante diélectrique est basse (constante diélectrique relative de l'ordre de 2). Les pertes dans les hydrocarbures sont négligeables jusqu'à des fréquences très élevées. Si une molécule d'hydrocarbure perd sa symétrie comme, par exemple, dans le cas de l'alcool éthylique ou méthylique, on assiste à la parution d'un moment de dipôle électrique et, par conséquent, à une constante supérieure à celle obtenue dans le cas des hydrocarbures, et à un phénomène de résonance à la fréquence de relaxation dipolaire.

Les phénomènes physiques décrits ci-dessus sont connus depuis la fin des années 30 (voire par exemple Peter Debye Nobel Lecture, 1936).

Cependant, ils n'ont pas jusqu'ici été mis en oeuvre pour l'analyse efficace du contenu de récipients.

On a représenté sur la figure 1, le boîtier d'un dispositif d'analyse conforme à la présente invention.

La géométrie générale de ce boîtier peut faire l'objet de nombreuses variantes de réalisation et ne sera donc pas décrite dans le détail par la suite.

De préférence, ce boîtier comprend un carter 10 métallique pour former un blindage autour du capteur électromagnétique conforme à la présente invention vis à vis de l'environnement extérieur.

Comme indiqué précédemment, ce carter définie une cavité ou canal 20 dont la partie inférieure 22 présente une concavité dirigée vers le haut, conçue pour recevoir un récipient à analyser et garantir un positionnement précis de ce dernier par rapport aux moyens émetteurs/récepteurs de champ électromagnétique conformes à l'invention.

Plus précisément encore, dans le cadre de la présente invention, la cavité 20 précitée est formée d'un canal de section droite constante dont les génératrices sont inclinées vers le bas en éloignement de la face avant ouverte 12 par laquelle un récipient est introduit.

La face arrière de cette cavité ou canal 20 est fermée pour éviter que le récipient analysé ne glisse sur le fond 22.

La section droite du canal 20 peut faire l'objet de nombreuses variantes. On a représenté sur la figure 1, une première variante selon laquelle le canal 20 possède une section droite en forme de trou de serrure comprenant une partie centrale cylindrique prolongée par deux excroissances diamétralement opposées de contour globalement rectangulaire. Les avantages des différentes variantes de sections droites seront explicités dans la suite.

On a représenté sur la figure 4, une variante de réalisation selon laquelle le canal 20 présente une section droite circulaire. On a représenté sur la figure 5 annexée, une autre variante de réalisation selon laquelle le canal 20 possède une section droite carrée, voire rectangulaire, dont les diagonales sont respectivement verticale et horizontale de sorte qu'une arête coïncide avec le point le plus bas du canal 20.

Comme on le voit sur les figures 1, 4 et 5 annexées, le boîtier 10 comporte en outre de préférence un pupitre de contrôle 30 équipé d'un clavier de saisie et/ou de programmation, d'un afficheur et de moyens de signalisation (lumineux et/ou sonore) de présence réseau et d'alarme. A cet égard, l'invention n'est bien entendu pas limitée aux modes de réalisation particuliers représentés sur les figures annexées.

De préférence, la cavité 20 est enrobée par un revêtement de protection plastique.

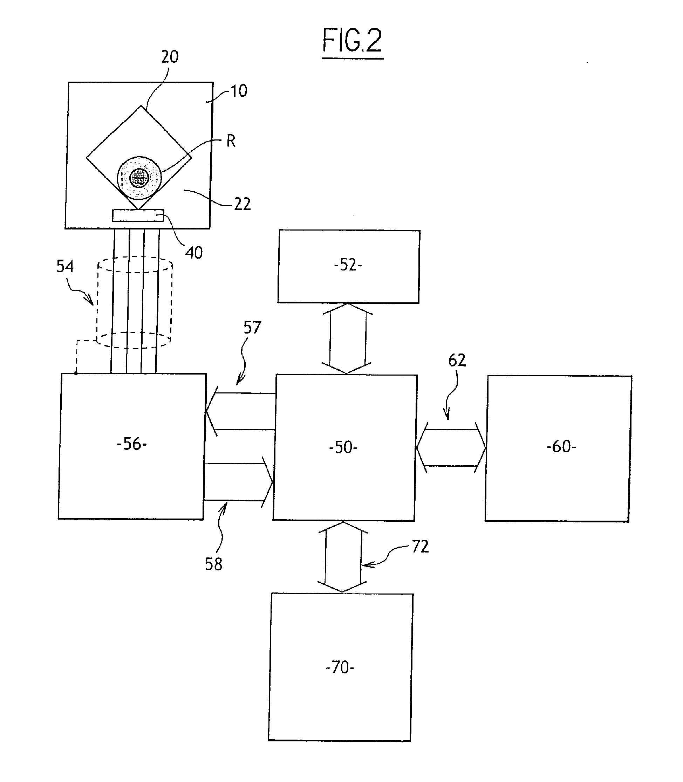

Comme on l'a illustré sur la figure 2 sur laquelle on a schématisé sous la référence R un récipient à analyser et sur laquelle on retrouve le fond 22 de la cavité 20, de préférence le capteur ou les capteurs électromagnétiques destiné(s) à mesurer les caractéristiques diélectriques complexes de la bouteille R et de son contenu sont placés autour de la cavité 20.

Ces moyens émetteurs/récepteurs de champ électromagnétique, sont formés de préférence d'un ou plusieurs transducteurs (antennes) 40 relié(s), par l'intermédiaire d'un réseau de connexion 54, d'un réseau électromagnétique de mesure 56 et de bus 57, 58, à un générateur 50, conçus pour émettre une onde électromagnétique. Typiquement le générateur 50 est adapté pour couvrir la plage de fréquences allant de quelques Hz, par exemple 5Hz à qqs GHz, par exemple 20 ou 50 GHz. Le générateur 50 est mis en oeuvre, soit manuellement par un opérateur lorsque celui-ci introduit un récipient R dans le canal 20, soit automatiquement sous l'effet d'un capteur 52 conçu pour détecter la présence d'un récipient R dans le canal 20.

Les moyens 50 sont conçus par ailleurs pour mesurer l'impédance complexe des moyens émetteurs 40 influencés par la charge constituée par le récipient R et son contenu, représentative des caractéristiques diélectriques complexes de ce récipient R et de son contenu. Plus précisément, les moyens 50 sont conçus pour mesurer cette impédance complexe à plusieurs fréquences échantillonnées sur la plage d'excitation précitée de quelques Hz à plusieurs GHz. Typiquement, les moyens 50 opèrent ainsi sur un nombre de fréquences compris entre 10 et 50, avantageusement sur une trentaine de fréquences.

Par ailleurs, les moyens 50 sont adaptés pour fournir une information liée à l'impédance complexe mesurée et à la nature du contenu du récipient détecté en conséquence.

De préférence, ces moyens 50 sont adaptés pour comparer l'impédance complexe ainsi mesurée avec des valeurs de référence prédéterminées pour la même plage de fréquences et à générer une alarme lorsque l'impédance complexe mesurée s'écarte des valeurs de référence.

On a représenté sur la figure 2, une mémoire 60 couplée aux moyens d'analyse 50 par un bus de communication 62, et dans laquelle peuvent être mémorisées les valeurs de référence prédéterminées sur la plage de fréquence de travail. On a par ailleurs représenté sur la même figure 2 sous la référence 70, des moyens d'alarme, présents de préférence sur le pupitre de contrôle 30, reliés aux moyens 50 par un bus de communication 72 et adaptés pour générer une alarme sonore et/ou visuelle, lorsque l'impédance complexe mesurée s'écarte des valeurs de référence.

En variante, les valeurs de référence peuvent être calculées par les moyens 50 et non pas contenues dans une mémoire 60.

Par ailleurs, selon une autre variante, les moyens 70 peuvent être adaptés pour indiquer directement la nature du contenu du récipient R ou au moins la famille de ce contenu à la place de ou en complément des moyens d'alarme précités.

Les moyens 40 émetteurs/récepteurs de champ électromagnétique peuvent faire l'objet de nombreux modes de réalisation.

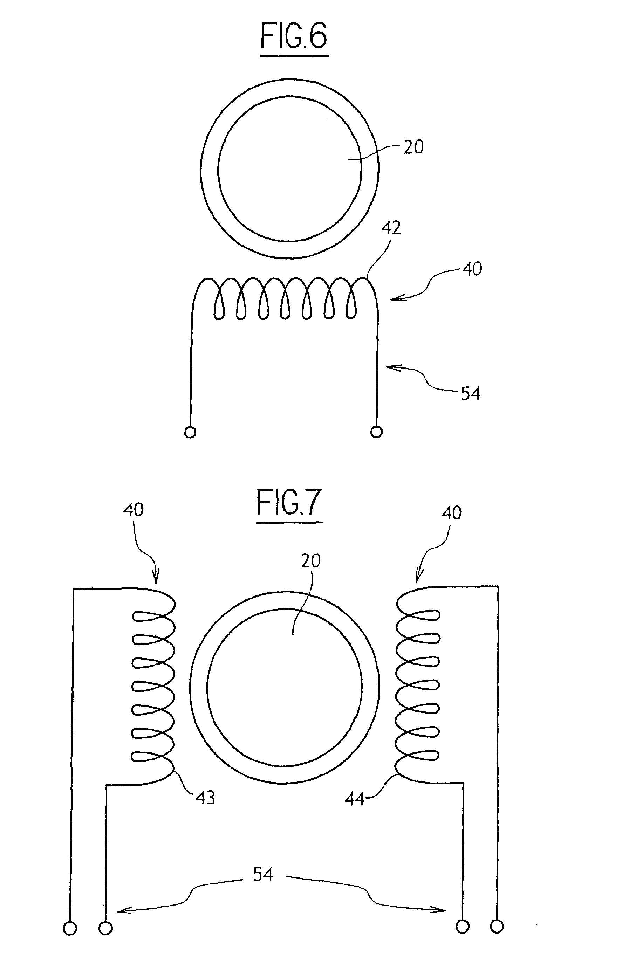

La figure 6 illustre un premier mode de réalisation dans lequel ces moyens 40 sont formés d'un simple bobinage 42 formant émetteur et récepteur, relié par un réseau 54 à deux fils aux moyens 56.

La figure 7 illustre un second mode de réalisation dans lequel les moyens 40 sont formés de deux bobinages 43, 44 formant respectivement, et le cas échéant alternativement, émetteur et récepteur, reliés par un réseau 54 à quatre fils aux moyens 56.

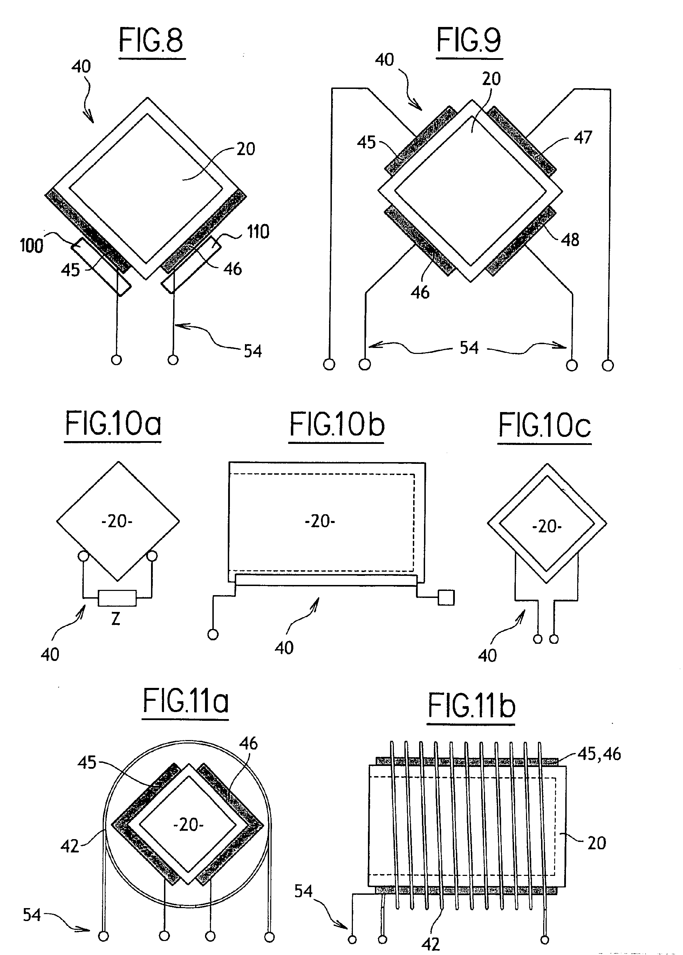

La figure 8 illustre un troisième mode de réalisation dans lequel les moyens 40 sont formés de deux armatures 45, 46 d'une capacité entourant la cavité 20 destinée à recevoir le récipient R et reliés par un réseau 54 à deux fils aux moyens 56.

La figure 9 illustre une variante de la figure 8 dans laquelle les moyens 40 comprennent deux capacités composées de quatre armatures 45, 46, 47, 48, reliées par un réseau 54 à quatre fils aux moyens 56 et formant respectivement, et le cas échéant alternativement, émetteur et récepteur.

Les figures 10a, 10b, 10c représentent une autre variante de réalisation selon laquelle les moyens 40 sont formés de lignes de transmission. Typiquement, ces lignes de transmission opèrent dans le domaine des micro-ondes. Elles peuvent être formées de lignes bifilaires ou de guides d'ondes à fentes.

Par ailleurs, dans le cadre de la présente invention, comme illustré sur les figures 11a et 11b, on peut utiliser des capteurs mettant en oeuvre simultanément un transducteur inductif 42 et un transducteur capacitif 45, 46. Cette disposition permet de déceler que la croissance de la partie réelle de la constante diélectrique complexe est due à une armature métallique interne au récipient et non à un ou des liquides ayant des propriétés particulières. Cette disposition permet ainsi de déceler la présence d'écrans métalliques susceptibles de former blindage perturbant la mesure. Le capteur inductif 42 alimenté par une source de courant alternatif produira, dans ce cas, des courants de Foucault dans la partie métallique. Ces courants seront mesurés par le dispositif de traitement. Et la comparaison des signaux provenant du transducteur de champ électrique 45, 46 et du transducteur de champ magnétique 42 permet une détection satisfaisante.

Bien entendu, le nombre de moyens composant les émetteurs et/ou récepteurs n'est aucunement limité et peut être supérieur à ceux illustrés sur les figures annexées.

L'homme de l'art comprendra à la lecture de la description détaillée qui précède, que la présente invention propose ainsi un capteur électromagnétique à balayage de fréquences élevées qui permet de mesurer les caractéristiques diélectriques de la bouteille R et de son contenu.

Une fois que l'objet R à analyser est positionné dans la cavité 20, le générateur 50 est activé, soit manuellement, soit automatiquement, et l'impédance complexe du réseau formé par le circuit d'émission/réception 40 influencée par le récipient R et son contenu est mesurée.

L'impédance mesurée dépend du circuit de transmission/réception et de la charge, représentée par la bouteille examinée. Cette impédance complexe est composée par une partie réelle, liée aux pertes (conductibilité) dans l'objet R analysé et d'une partie imaginaire, liée aux caractéristiques diélectriques.

La mesure de l'impédance est effectuée à différentes fréquences dans la plage déterminée.

Tous les liquides comestibles à base d'eau, comme des boissons sans alcool, le vin et les liqueurs sont bien identifiables par leurs caractéristiques diélectriques polaires, avec une constante diélectrique élevée et des pertes situées entre un minimum et une valeur prédéterminée. Une valeur différente de celle typique des liquides comestibles sera par conséquent détectée et provoquera une alarme acoustique et/ou visuelle, plus le cas échéant des messages éventuels sur l'afficheur, ou encore, selon la variante retenue, directement l'indication de la nature du contenu détecté.

Comme décrit précédemment, la section droite du canal 20 peut faire l'objet de nombreuses variantes. Par exemple, la section droite peut être en forme de trou de serrure comme illustré à la figure 1, la section droite peut également être de forme circulaire comme illustré à la figure 4, ou de forme carrée voire rectangulaire (à diagonales verticales et horizontales) comme illustré à la figure 5.

Pour certaines géométries de la section droite du canal, l'impédance complexe mesurée peut varier en fonction du volume du récipient dans lequel un même liquide analysé est contenu.

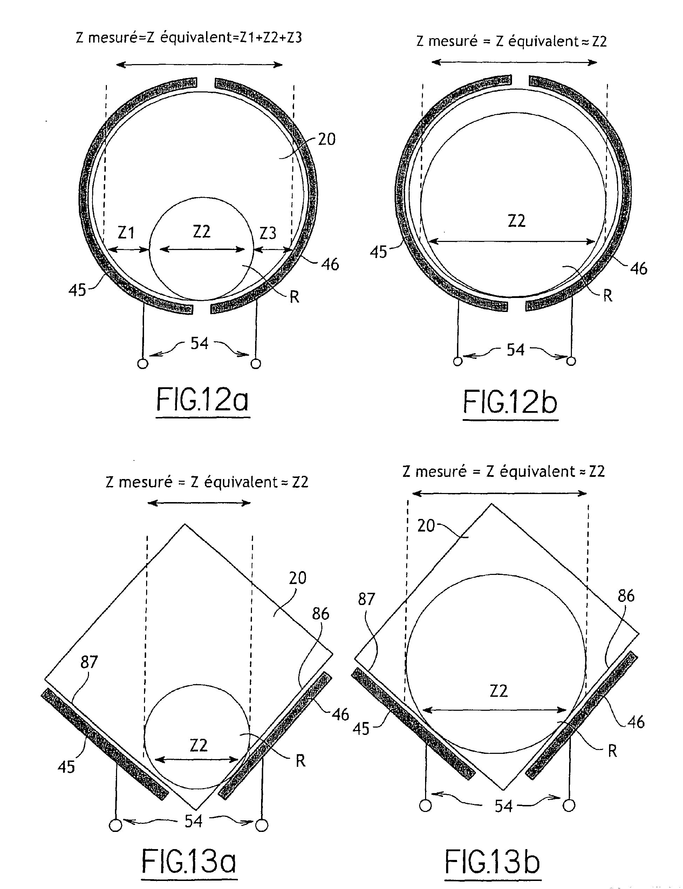

Ainsi, dans le cas d'un canal 20 dont la section droite est de forme circulaire tel qu'illustré aux figures 12a et 12b, l'impédance complexe mesurée Zmesuré pour un récipient R de 50 centilitres contenant de l'eau (figure 12a) sera différente de l'impédance complexe mesurée Zmesuré pour un récipient R de 2 litres contenant de l'eau (figure 12b).

Ceci est dû au fait que l'impédance complexe mesurée Zmesuré correspond à l'impédance complexe équivalente Zéquivalent de l'ensemble des dipôles situés entre les armatures 45, 46 des moyens émetteurs/récepteurs de champ électromagnétique.

On a illustré aux figures 12a et 12b un dispositif comprenant un canal 20 de section droite de forme circulaire spécialement adapté à la mesure de l'impédance complexe du contenu d'une bouteille cylindrique de 2 litres, c'est-à-dire un canal 20 dont le diamètre de la section droite est légèrement supérieur au diamètre d'une bouteille cylindrique de 2 litres.

Tel qu'illustré à la figure 12a, lorsque l'on utilise ce dispositif avec un récipient R de 50 centilitres disposé dans le canal 20 de sorte que son axe longitudinal du récipient R soit sensiblement horizontal, l'impédance complexe mesurée Zmesuré est égale à la somme de l'impédance complexe de l'eau Z2 contenue dans le récipient R et des impédances complexes Z1 et Z3 de l'air situé entre les parois du récipient R et les armatures 45, 46.

Les impédances complexes Z1 et Z3 de l'air situé entre les parois du récipient R et les armatures 45, 46 sont considérées comme des impédances parasites qu'il convient de minimiser afin que l'impédance complexe mesurée soit sensiblement égale à l'impédance complexe du liquide contenu dans le récipient à analyser.

Tel qu'illustré à la figure 12b, lorsque l'on utilise ce dispositif avec un récipient de 2 litres pour lequel la section droite est spécialement adaptée, l'impédance complexe mesurée Zmesuré est sensiblement égale à l'impédance complexe de l'eau Z2 contenue dans le récipient R.

En effet, avec un récipient de 2 litres pour lequel la section droite est spécialement adaptée, les impédances parasites Z1 et Z3 deviennent négligeables du fait que les distances entre les parois du récipient R et les armatures 45, 46 sont faibles.

Les géométries carrée (ou rectangulaire) et en trou de serrure de la section droite présente l'avantage de rendre la mesure de l'impédance complexe indépendante du volume du récipient dans lequel le liquide à analyser est contenu.

En effet, ces géométries permettent de limiter la distance entre les parois du récipient R et les armatures 45, 46 des moyens émetteurs/récepteurs de champ électromagnétique quelque soit le volume du récipient R.

On a illustré aux figures 13a, 13b un dispositif selon la présente invention comprenant un canal 20 de section droite de forme carrée, dont les diagonales sont respectivement verticale et horizontale de sorte qu'une arête coïncide avec le point le plus bas du canal 20.

Dans le cas d'un récipient R de forme cylindrique placé dans le canal 20 de sorte que l'axe longitudinal du récipient R soit horizontal, le récipient R aura tendance à venir en contact avec les cloisons 86, 87 du canal 20 du fait de la gravité, comme illustré aux figures 13a et 13b.

Ainsi, la distance entre les parois du récipient et les armatures 45, 46 (qui sont très proche des cloisons 86, 87 du canal 20) est quasi nulle quelque soit le diamètre du récipient contenant le liquide à analyser, de sorte que les impédances parasites Z1 et Z3 de l'air situé entre les parois du récipient R et les armatures sont négligeables. L'impédance mesurée Zmesuré est sensiblement égale à l'impédance complexe du liquide contenu dans le récipient R quelque soit le volume du récipient R utilisé.

Tout comme pour un canal dont la section droite est carrée, une géométrie de section droite en forme de clé de serrure permet de minimiser la distance entre les parois du récipient contenant le liquide à analyser et les armatures du dispositif quelque soit le volume du récipient R utilisé, de sorte que la mesure de l'impédance complexe est indépendante du volume du récipient dans lequel le liquide à analyser est contenu. Ainsi, dans le cas d'un récipient cylindrique de 50 cl, celui-ci est positionné entre les excroissances inférieures de la section droite en forme de clé de serrure (la distance entre ces excroissances peut être prévu légèrement supérieur au diamètre d'une bouteille cylindrique de 50 centilitres de type standard). Dans le cas d'un récipient de 2 litres, celui-ci est positionné au niveau de la partie centrale cylindrique du canal en forme de clé de serrure.

Ainsi, le canal 20 du dispositif définit préférentiellement une concavité 22 dirigée vers le haut. Encore plus préférentiellement, la convergence des cloisons 86, 87 du canal 20 est déterminée de sorte que non seulement la distance entre le point le plus bas du canal 20 et le centre de gravité du récipient R augmente en fonction du volume du récipient R mais de plus le point de contact du récipient R sur les parois du canal 20 s'élève et la hauteur de la base du récipient par rapport au point le plus bas du canal 20, augmente également en fonction du volume du récipient R. Plus préférentiellement encore, la concavité 22 dirigée vers le haut est obtenue grâce à deux tronçons rectilignes de manière à minimiser l'effet des impédances parasites Z1 et Z3 de l'air situé entre les parois du récipient R et les cloisons 86, 87 du canal 20.

Bien entendu la présente invention n'est pas limitée aux modes de réalisation particuliers qui viennent d'être décrits mais s'étend à toute variante conforme à son esprit.

On notera par ailleurs que, dans le cadre de la présente invention, les capteurs 40 sont de préférence adaptés pour couvrir au moins une partie substantielle des récipients, voire la totalité de ceux-ci. Ceci garantit un haut niveau de sécurité dans l'analyse, puisque ceci permet d'analyser l'intégralité du contenu des récipients et non pas seulement une partie de ceux-ci.

Lorsqu'il est prévu un seul transducteur, celui-ci est simultanément ou successivement émetteur et récepteur.

Lorsqu'il est prévu plusieurs transducteurs, toutes les combinaisons sont possibles, c'est-à-dire que ces transducteurs peuvent être simultanément ou successivement émetteur et/ou récepteur.

Selon une autre caractéristique avantageuse, le dispositif d'analyse conforme à la présente invention comprend en outre un ensemble détecteur de rayonnement ionisant ou radioactif. Cet ensemble est destiné à détecter la présence éventuelle de traces de produits radioactifs dans le récipient analysé.

L'ensemble détecteur de rayonnement ionisant ou radioactif peut faire l'objet de nombreux modes de réalisation. Il peut être formé de toutes structures connues de l'homme de l'art, en particulier toute structure apte à convertir un rayon ionisant détecté, en un signal électrique exploitable. Il peut s'agir par exemple et non limitativement d'un détecteur de type Geiger comprenant un tube ou chambre qui loge un gaz dont la composition est choisie pour générer une décharge ionisante lors de la détection d'un rayonnement actif, et de là une impulsion électrique. Il peut également s'agir d'un détecteur à scintillateur apte à convertir l'énergie détectée en scintillations lumineuses converties ensuite en signal électrique par un réseau de photomultiplicateurs. De nombreux scintillateurs ont été proposés à cet effet, par exemple à base de iodure de sodium, de iodure de césium ou encore de germanate de bismuth.

L'ensemble détecteur de rayonnement ionisant est placé en tout lieu approprié et de préférence à proximité immédiate des parois de la cavité 20, sur l'extérieur de celle-ci. On a représenté sur la figure 8, sous la référence 100, 110, une localisation a priori optimale de cet ensemble, sous la cavité 20, contre les deux parois composant le dièdre inférieur de la cavité 20.

L'ensemble détecteur de rayonnement ionisant 100, 110 est adapté pour travailler en temps masqué, en parallèle du dispositif de mesure d'impédance complexe précédemment décrit. L'ensemble détecteur de rayonnement ionisant 100, 110 est piloté et mis en service par tous moyens appropriés détectant la présence d'un récipient dans la cavité. De préférence, mais non limitativement, l'ensemble détecteur de rayonnement ionisant est ainsi initié par un signal prélevé sur la chaîne de mesure d'impédance complexe et représentatif de la présence d'un tel récipient dans le canal 20.

On a décrit précédemment plusieurs modes de réalisation de moyens 40 formant émetteurs/récepteurs de champ électromagnétique. Dans le cadre de la présente invention, il est de préférence prévu des moyens permettant de modifier la configuration des moyens formant émetteurs et des moyens formant récepteurs, afin d'enrichir les informations disponibles, par exemple sur le volume du récipient analysé.

On a en particulier illustré sur la figure 9 une variante de réalisation selon laquelle les moyens 40 comprennent quatre armatures capacitive 45, 46, 47 et 48 disposées respectivement sur l'extérieur de chacune des quatre faces d'une section carrée du canal 20. Dans ce contexte, il est de préférence prévu des moyens de commutation au sein du réseau de mesure 56, pour modifier la configuration des moyens 40 de sorte que dans une première configuration l'une des deux armatures inférieures 46 ou 48 forme un émetteur tandis que l'autre armature inférieure 48 ou 46 forme un récepteur, et une seconde configuration dans laquelle les deux armatures inférieures 46 et 48 forment des émetteurs tandis que les deux armatures supérieures 45 et 47 forment des récepteurs, ou inversement.

## Revendications

1. Dispositif d'analyse de la composition du contenu d'un récipient comprenant :
- d'une part un canal (20) de réception d'un récipient, lequel canal de réception est défini par des génératrices inclinées vers le bas en éloignement de la face avant ouverte du canal par laquelle un récipient est introduit, et dont la partie inférieure (22) présente une concavité dirigée vers le haut, et
- d'autre part des moyens (40, 50) d'analyse non destructive associés à ce canal.

2. Dispositif selon la revendication 1, **caractérisé par le fait que** les moyens (40, 50) d'analyse non destructive comprennent :
- des moyens (40) émetteurs/récepteurs d'un champ électromagnétique à au moins plusieurs fréquences comprises dans une plage de fréquences déterminée,
- des moyens (50) aptes à mesurer l'impédance complexe des moyens émetteurs/récepteurs influencée par la charge constituée par le récipient (R) et son contenu, représentative des caractéristiques diélectriques complexes du récipient et de son contenu, et
- des moyens (50) aptes à fournir une information liée à l'impédance complexe mesurée et en conséquence à la nature du contenu dudit récipient.

3. Dispositif selon la revendication 2, **caractérisé par le fait que** les moyens (50) aptes à fournir une information comprennent des moyens aptes à comparer l'impédance complexe mesurée avec des valeurs de référence prédéterminées pour la même plage de fréquences et à générer une alarme lorsque l'impédance complexe mesurée s'écarte des valeurs de référence.

4. Dispositif selon l'une des revendications 2 ou3, **caractérisé par le fait que** les moyens (50) aptes à fournir une information liée à l'impédance complexe mesurée comprennent des moyens (70) aptes à indiquer la nature ainsi détectée du contenu du récipient ou au moins la famille de ce contenu.

5. Dispositif selon l'une des revendications 2 à 4, **caractérisé par le fait que** les moyens (40) émetteurs/récepteurs d'un champ électromagnétique sont adaptés pour balayer la plage de fréquences allant de quelques Hz à quelques GHz.

6. Dispositif selon l'une des revendications 2 à 5, **caractérisé par le fait que** les moyens (50) aptes à mesurer l'impédance complexe sont adaptés pour mesurer celle-ci sur une pluralité de fréquences échantillonnées sur la plage couverte par les moyens émetteurs/récepteurs.

7. Dispositif selon l'une des revendications 2 à 6 prise en combinaison avec la revendication 3, **caractérisé par le fait que** les moyens aptes à comparer l'impédance complexe mesurée sont adaptés pour comparer celle-ci avec des valeurs de référence contenues dans une mémoire (60).

8. Dispositif selon l'une des revendications 2 à 7, **caractérisé par le fait qu'**il comprend un capteur (52) adapté pour détecter la mise en place d'un récipient (R) dans le canal (22).

9. Dispositif selon l'une des revendications 2 à 7, **caractérisé par le fait qu'**il comprend des moyens à actionnement manuel adaptés pour initier la mise en service des moyens (40) émetteurs/récepteurs d'un champ électromagnétique.

10. Dispositif selon l'une des revendications 1 à 9, **caractérisé par le fait qu'**il est placé dans un carter (10) métallique.

11. Dispositif selon l'une des revendications 1 à 10, **caractérisé par le fait que** le canal (20) définit une concavité (22) dirigée vers le haut obtenue grâce à deux tronçons rectilignes.

12. Dispositif selon l'une des revendications 2 à 11, **caractérisé par le fait que** les moyens (40) émetteurs/récepteurs d'un champ électromagnétique sont de type inductif.

13. Dispositif selon l'une des revendications 2 à 11, **caractérisé par le fait que** les moyens (40) émetteurs/récepteurs d'un champ électromagnétique sont de type capacitif.

14. Dispositif selon l'une des revendications 2 à 11, **caractérisé par le fait que** les moyens (40) émetteurs/récepteurs d'un champ électromagnétique sont constitués par des lignes de transmission.

15. Dispositif selon l'une des revendications 2 à 14, **caractérisé par le fait que** les moyens (40) émetteurs/récepteurs mettent en oeuvre simultanément un transducteur inductif (42) et un transducteur capacitif (45, 46), notamment pour la détection de parties métalliques dans le récipient.

16. Dispositif selon l'une des revendications 1 à 15, **caractérisé par le fait qu'**il comprend en outre un ensemble (100, 110) détecteur de rayonnement ionisant ou radioactif.

17. Dispositif selon la revendication 16, **caractérisé par le fait que** l'ensemble détecteur de rayonnement ionisant (100, 110) est placé à proximité immédiate des moyens (20) support de récipient, sur l'extérieur de ceux-ci.

18. Dispositif selon l'une des revendications 16 ou 17, **caractérisé par le fait que** l'ensemble détecteur de rayonnement ionisant (100, 110) est adapté pour travailler en temps masqué, en parallèle d'un dispositif de mesure d'impédance complexe.

19. Dispositif selon l'une des revendications 16 à 18, **caractérisé par le fait que** l'ensemble détecteur de rayonnement ionisant (100, 110) est piloté et mis en service par un signal prélevé sur la chaîne de mesure d'impédance complexe et représentatif de la présence d'un récipient sur les moyens (20) support de récipient.

20. Dispositif selon l'une des revendications 1 à 19, **caractérisé par le fait qu'**il comprend des moyens permettant de modifier la configuration de moyens formant émetteurs et des moyens formant récepteurs.

21. Dispositif selon l'une des revendications 1 à 20, **caractérisé par le fait que** des moyens émetteurs/récepteurs (40) comprennent quatre armatures capacitives (45, 46, 47 et 48) disposées respectivement sur l'extérieur de chacune des quatre faces d'une section carrée d'un canal (20) de réception de récipient et qu'il est prévu des moyens de commutation pour modifier la configuration des moyens (40) de sorte que dans une première configuration l'une des deux armatures inférieures (46 ou 48) forme un émetteur tandis que l'autre armature inférieure (48 ou 46) forme un récepteur, et une seconde configuration dans laquelle les deux armatures inférieures (46 et 48) forment des émetteurs tandis que les deux armatures supérieures (45 et 47) forment des récepteurs, ou inversement.

## Claims

1. A device for analyzing the composition of the contents of a container comprising:
- a channel (20) for receiving a container on the one hand, which receiving channel is defined by generating lines tilted downwards away from the open front face of the channel through which a container is introduced, and the lower part (22) of the channel having a concavity directed upwards and
- non-destructive analysis means (40, 50) associated with this channel, on the other hand.

2. The device according to claim 1, **characterized by** the fact that the non-destructive analysis means (40, 50) comprise:
- means (40) for emitting/receiving an electromagnetic field at least at several frequencies comprised in a determined frequency range,
- means (50) capable of measuring the complex impedance of the emitting/receiving means influenced by the load formed by the container (R) and its contents, representative of the complex dielectric characteristics of the container and of its contents, and
- means (50) capable of providing information on the measured complex impedance and, consequently, on the nature of the contents of said container.

3. The device according to claim 2, **characterized by** the fact that the means (50) capable of providing information comprise means capable of comparing the measured complex impedance with predetermined reference values for the same frequency range, and of generating an alarm when the measured complex impedance deviates from the reference values.

4. The device according to any of claims 2 or 3, **characterized by** the fact that the means (50) capable of providing information on the measured complex impedance comprise means (70) capable of indicating the thereby detected nature of the contents of the container or at least the family of these contents.

5. The device according to any of claims 2 to 4, **characterized by** the fact that the electromagnetic field emitting/receiving means (40) are adapted for scanning the range of frequencies from a few Hz to a few GHz.

6. The device according to any of claims 2 to 5, **characterized by** the fact that the means (50) capable of measuring the complex impedance are adapted in order to measure the latter over a plurality of sampled frequencies over the range covered by the emitting/receiving means.

7. The device according to any of claims 2 to 6 taken in combination with claim 3, **characterized by** the fact that the means capable of comparing the measured complex impedance are adapted in order to compare the latter with reference values contained in a memory (60).

8. The device according to any of claims 2 to 7, **characterized by** the fact that it comprises a sensor (52) adapted in order to detect the placing of a container (R) in the channel (22).

9. The device according to any of claims 2 to 7, **characterized by** the fact that it comprises manual actuation means adapted for initiating the setting in operation of means (40) for emitting/receiving an electromagnetic field.

10. The device according to any of claims 1 to 9, **characterized by** the fact that it is placed in a metal case (10).

11. The device according to any of claims 1 to 10, **characterized by** the fact that the channel (20) defines a concavity (22) directed upwardly obtained by means of two rectilinear sections.

12. The device according to any of claims 2 to 11, **characterized by** the fact that the electromagnetic field emitting/receiving means (40) are of inductive type.

13. The device according to any of claims 2 to 11, **characterized by** the fact that the electromagnetic field emitting/receiving means (40) are of capacitive type.

14. The device according to any of claims 2 to 11, **characterized by** the fact that the electromagnetic field emitting/receiving means are formed of transmission lines.

15. The device according to any of claims 2 to 14, **characterized by** the fact that the emitting/receiving means (40) simultaneously use an inductive transducer (42) and a capacitive transducer (45, 46) in particular for the detection of metal parts in the container.

16. The device according to any of claims 1 to 15, **characterized by** the fact that it further comprises a detector assembly (100, 110) detecting ionizing or radioactive radiation.

17. The device according to claim 16, **characterized by** the fact that the ionizing radiation detector assembly (100,110) is placed in the immediate vicinity of means (20) supporting the container, outside thereof.

18. The device according to one of claims 16 or 17, **characterized by** the fact that the ionizing radiation detector assembly (100, 110) is adapted to operate in hidden time, in parallel with a device for measuring complex impedance.

19. The device according to any of claims 16 to 18, **characterized by** the fact that the ionizing radiation detector assembly (100, 110) is driven and set in operation by a signal taken from the chain measuring complex impedance and representing the presence of a container on the container supporting means (20).

20. The device according to any of claims 1 to 19, **characterized by** the fact that it comprises means allowing modification of the configuration of emitter-forming means and receiver-forming means.

21. The device according to any of claims 1 to 20, **characterized by** the fact that the emitting/receiving means (40) comprise four capacitive frames (45, 46, 47 and 48) respectively positioned on the outside of each of the four faces of a square section of a channel (20) for receiving a container, and that switching means are provided for changing the configuration of the means (40) so that, in a first configuration, one of the two lower frames (46 or 48) forms an emitter whereas the other lower frame (48 or 46) forms a receiver, and a second configuration in which both lower frames (46 and 48) form emitters whereas both upper frames (45 and 47) form receivers, or vice versa.

## Patentansprüche

1. Vorrichtung zur Analyse der Zusammensetzung des Inhalts eines Behälters, umfassend:
- einerseits einen Kanal (20) zur Aufnahme eines Behälters, wobei der Aufnahmekanal durch Mantellinien definiert ist, die wegführend von der offenen Vorderseite des Kanals, durch die ein Behälter eingeführt wird, nach unten geneigt sind, und dessen unterer Bereich (22) eine nach oben gerichtete Konkavität aufweist, und
- andererseits nicht-destruktive Analysemittel (40, 50), die mit diesem Kanal verbunden sind.

2. Vorrichtung gemäß Anspruch 1, **dadurch gekennzeichnet, dass** die nicht-destruktiven Analysemittel (40, 50) umfassen:
- Mittel (40) zum Aussenden/Empfangen eines elektromagnetischen Felds bei wenigstens mehreren Frequenzen, die in einem bestimmten Frequenzbereich enthalten sind,
- Mittel (50), welche die komplexe Impedanz der Aussende-/Empfangsmittel, die von der Ladung beeinflusst wird, die durch den Behälter (R) und dessen Inhalt gebildet wird und repräsentativ für die komplexen dielektrischen Eigenschaften des Behälters und seines Inhalts sind, messen können, und
- Mittel (50) welche eine Information, die mit der gemessenen komplexen Impedanz und folglich mit der Natur des Inhalts des Behälters verbunden ist, bereitstellen können.

3. Vorrichtung gemäß Anspruch 2, **dadurch gekennzeichnet, dass** die Mittel (50), welche eine Information bereitstellen können, Mittel umfassen, welche die gemessene komplexe Impedanz mit vorbestimmten Referenzwerten für den gleichen Frequenzbereich vergleichen und einen Alarm erzeugen können, wenn die gemessene komplexe Impedanz von den Referenzwerten abweicht.

4. Vorrichtung gemäß einem der Ansprüche 2 oder 3, **dadurch gekennzeichnet, dass** die Mittel (50), welche eine Information, die mit der gemessenen komplexen Impedanz verbunden ist, bereitstellen können, Mittel (70) umfassen, welche die auf diese Weise nachgewiesene Natur des Inhalts des Behälters oder zumindest der Familie, zu der dieser Inhalt gehört, anzeigen können.

5. Vorrichtung gemäß einem der Ansprüche 2 bis 4, **dadurch gekennzeichnet, dass** die Mittel (40) zum Aussenden/Empfangen eines elektromagnetischen Felds ausgebildet sind, um den Frequenzbereich von einigen Hz bis zu einigen GHz abzutasten.

6. Vorrichtung gemäß einem der Ansprüche 2 bis 5, **dadurch gekennzeichnet, dass** die Mittel (50), welche die komplexe Impedanz messen können, ausgebildet sind, um diese auf einer Vielzahl von Frequenzen, die auf den durch die Aussende-/Empfangsmittel abgedeckten Bereich geeicht sind, zu messen.

7. Vorrichtung gemäß einem der Ansprüche 2 bis 6 in Kombination mit Anspruch 3, **dadurch gekennzeichnet, dass** die Mittel, welche die gemessene komplexe Impedanz vergleichen können, ausgebildet sind, um diese mit in einem Speicher (60) enthaltenen Referenzwerten zu vergleichen.

8. Vorrichtung gemäß einem der Ansprüche 2 bis 7, **dadurch gekennzeichnet, dass** sie einen Sensor (52) umfasst, der ausgebildet ist, um die Platzierung eines Behälters (R) in dem Kanal (22) zu detektieren.

9. Vorrichtung gemäß einem der Ansprüche 2 bis 7, **dadurch gekennzeichnet, dass** sie Mittel zur manuellen Betätigung umfasst, die ausgebildet sind, um die Mittel (40) zum Aussenden/Empfangen eines elektromagnetischen Felds in Betrieb zu setzen.

10. Vorrichtung gemäß einem der Ansprüche 1 bis 9, **dadurch gekennzeichnet, dass** sie in einem Metallgehäuse (10) untergebracht ist.

11. Vorrichtung gemäß einem der Ansprüche 1 bis 10, **dadurch gekennzeichnet, dass** der Kanal (20) eine Konkavität (22) definiert, die mittels zweier geradliniger Abschnitte nach oben gerichtet ist.

12. Vorrichtung gemäß einem der Ansprüche 2 bis 11, **dadurch gekennzeichnet, dass** die Mittel (40) zum Aussenden/Empfangen eines elektromagnetischen Felds vom induktiven Typ sind.

13. Vorrichtung gemäß einem der Ansprüche 2 bis 11, **dadurch gekennzeichnet, dass** die Mittel (40) zum Aussenden/Empfangen eines elektromagnetischen Felds vom kapazitiven Typ sind.

14. Vorrichtung gemäß einem der Ansprüche 2 bis 11, **dadurch gekennzeichnet, dass** die Mittel (40) zum Aussenden/Empfangen eines elektromagnetischen Felds durch Übertragungsleitungen gebildet werden.

15. Vorrichtung gemäß einem der Ansprüche 2 bis 14, **dadurch gekennzeichnet, dass** die Aussende-/Empfangsmittel (40) gleichzeitig einen induktiven Wandler (42) und einen kapazitiven Wandler (45, 46) verwenden, insbesondere um Metallteile in dem Behälter nachzuweisen.

16. Vorrichtung gemäß einem der Ansprüche 1 bis 15, **dadurch gekennzeichnet, dass** sie außerdem eine Detektionseinheit (100, 110) für ionisierende oder radioaktive Strahlung umfasst.

17. Vorrichtung gemäß Anspruch 16, **dadurch gekennzeichnet, dass** die Detektionseinheit für ionisierende Strahlung (100, 110) in unmittelbarer Nähe zu den Trägermitteln (20) für den Behälter auf deren Außenseite angeordnet ist.

18. Vorrichtung gemäß einem der Ansprüche 16 oder 17, **dadurch gekennzeichnet, dass** die Detektionseinheit für ionisierende Strahlung (100, 110) ausgebildet ist, um in Überlappungszeit parallel zu einer Vorrichtung zur Messung der komplexen Impedanz zu arbeiten.

19. Vorrichtung gemäß einem der Ansprüche 16 bis 18, **dadurch gekennzeichnet, dass** die Detektionseinheit für ionisierende Strahlung (100, 110) durch ein Signal gesteuert und in Betrieb gesetzt wird, welches in der Messkette der komplexen Impedanz abgenommen wird und repräsentativ für die Anwesenheit eines Behälters auf den Trägermitteln (20) für den Behälter ist.

20. Vorrichtung gemäß einem der Ansprüche 1 bis 19, **dadurch gekennzeichnet, dass** sie Mittel enthält, die eine Modifizierung der Konfiguration der Mittel, welche die Sender bilden, und der Mittel, welche die Empfänger bilden, ermöglichen.

21. Vorrichtung gemäß einem der Ansprüche 1 bis 20, **dadurch gekennzeichnet, dass** die Aussende-/Empfangsmittel (40) vier kapazitive Armierungen (45, 46, 47, 48) umfassen, die jeweils auf der Außenseite jeder der vier Oberflächen eines viereckigen Abschnitts eines Kanals (20) zur Aufnahme des Behälters angeordnet sind, und dass Kommutationsmittel vorgesehen sind, um die Konfiguration der Mittel (40) derart zu modifizieren, dass in einer ersten Konfiguration eine der beiden niedrig gelegenen Armierungen (46 oder 48) einen Sender bildet, während die andere niedrig gelegene Armierung (48 oder 46) einen Empfänger bildet, und in einer zweiten Konfiguration beide niedrig gelegenen Armierungen (46 und 48) Sender bilden, während die beiden höher gelegenen Armierungen (45 und 47) Empfänger bilden, oder umgekehrt.
